# EUROPÄISCHE PATENTSCHRIFT

(11) **EP 2 103 811 B1**
(45) Veröffentlichungstag und Bekanntmachung des Hinweises auf die Patenterteilung: **06.11.2013**
(21) Anmeldenummer: 09003020.6
(22) Anmeldetag: 03.03.2009
(51) Int. Cl.: F04D 27/02, F04D 29/16, F04D 29/68

(54) **Fluid-Injektor-Düse**
Fluid injection nozzle
Buse d'injection de fluide

(30) Priorität: 20.03.2008 DE 102008015207
(43) Veröffentlichungstag der Anmeldung: 23.09.2009
(73) Patentinhaber: Rolls-Royce Deutschland Ltd & Co KG, 15827 Blankenfelde-Mahlow (DE)
(72) Erfinder: Gümmer, Volker, Dr., 15831 Mahlow (DE)
(74) Vertreter: Weber, Joachim

(56) Entgegenhaltungen:
- EP-A1- 1 710 442
- EP-A2- 1 536 147
- DE-A1- 2 352 236
- DE-A1-102004 030 597
- GB-A- 1 386 281
- US-A- 4 146 352
- US-A1- 2005 129 500
- US-A1- 2005 226 717

## Beschreibung

Die Erfindung bezieht sich auf eine Injektordüse einer Strömungsarbeitsmaschine, insbesondere einer Fluggasturbine gemäß dem Oberbegriff des Anspruchs 1.

Die vorliegende Erfindung bezieht sich auf Strömungsmaschinen wie Bläser, Verdichter, Pumpen und Turbinen, sowohl in axialer, halbaxialer als auch in radialer Bauart. Das Arbeitsmedium oder Fluid kann gasförmig oder flüssig sein.

Die Strömungsmaschine kann eine oder mehrere Stufen mit jeweils einem Rotor und einem Stator umfassen.

Der Rotor besteht aus einer Anzahl von Schaufeln, die mit der rotierenden Welle der Strömungsmaschine verbunden sind. Der Rotor ist mit freiem Schaufelende oder mit Deckband am Gehäuse ausgeführt. Der Stator besteht aus einer Anzahl feststehender Schaufeln, die gehäuseseitig mit festem Schaufelende ausgeführt sind.

Die Strömungsmaschine kann vor dem ersten Rotor eine besondere Form eines Stators, ein sogenanntes Vorleitrad aufweisen.

Es kann mindestens ein Stator oder Vorleitrad abweichend von der unbeweglichen Fixierung auch drehbar gelagert sein, um den Anströmwinkel zu verändern. Eine Verstellung erfolgt beispielsweise durch eine von außerhalb des Ringkanals zugängliche Spindel.

In besonderer Ausgestaltung kann die Strömungsmaschine mindestens eine Reihe verstellbarer Rotoren aufweisen.

Die aerodynamische Belastbarkeit und die Effizienz von Strömungsmaschinen, beispielsweise Bläsern, Verdichtern, Pumpen, Ventilatoren und Turbinen, wird insbesondere durch das Wachstum und die Ablösung von Grenzschichten im Rotorspitzenbereich nahe der Gehäusewand begrenzt. Der Stand der Technik hält für dieses Problem nur bedingt Lösungen bereit. Es existieren zahlreiche Konzepte zur Fluidzufuhr an Turbinenschaufeln, die im wesentlichen der Oberflächenkühlung und nicht der Grenzschichtenergetisierung dienen.

Weiterhin sind für Verdichter-Rotoren Konzepte zur Luftzufuhr an Nabe und Gehäuse durch achsensymmetrisch angeordnete Schlitze bekannt, um die dortigen Wandgrenzschichten zu beeinflussen.

Schließlich gibt es Konzepte, bei denen Rotoren in Gehäusenähe aus einzelnen Injektordüsen angeblasen werden, um die dortige Radialspaltströmung günstig zu beeinflussen.

Der allgemeine Gedanke der Grenzschichtbeeinflussung durch Einblasung bzw. Fluidzufuhr ist somit im Stand der Technik enthalten, doch sind die bekannten Lösungen nur bedingt effektiv und in ihrer praktischen Anwendbarkeit sehr begrenzt.
Daher weisen über dem Laborstadium stehende Anwendungen von Strömungsarbeitsmaschinen keine dieser Konzepte auf. Wichtig für die Realisierbarbeit und die Wirksamkeit einer Fluideinbringung in den Strömungspfad einer Strömungsmaschine ist die Form und die Platzierung der Injektordüse. In dieser Hinsicht mangelt es an praktikablen Lösungen.

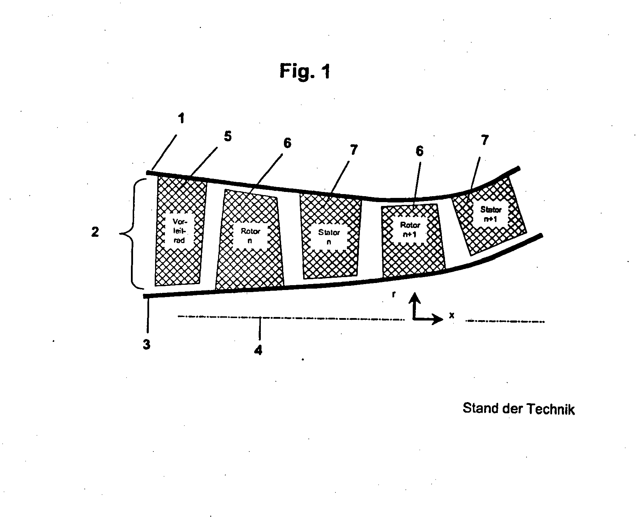

Die Fig.1 zeigt in schematischer Darstellung eine Strömungsmaschine als Beispiel eines Verdichters, bestehend aus einem Ringkanal 1, der innen durch eine Nabenkontur (Rotortrommel/Nabe 3) und außen durch eine Gehäusekontur (Gehäuse 1) begrenzt wird, und mit einer Anzahl von Rotorschaufelreihen und Statorschaufelreihen innerhalb des Ringkanals 2 ausgestattet ist (Rotorschaufeln 6 und Statorschaufeln 7). Zwischen den Schaufelreihen existieren beschaufelungsfreie Räume.

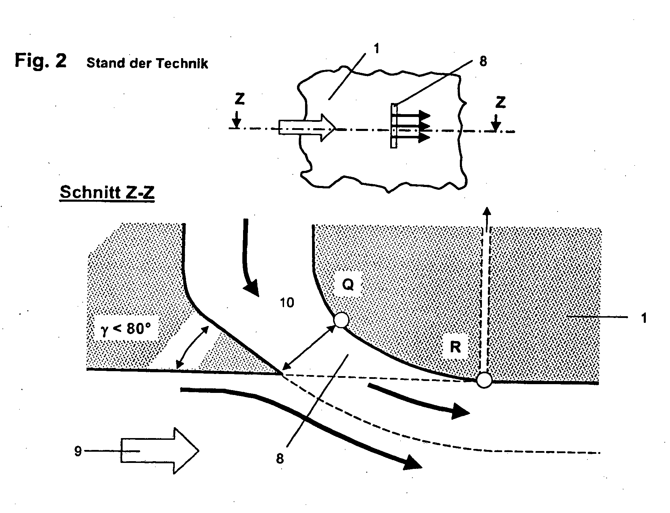

Wie durch den großen Pfeil in Fig. 2 dargestellt, wird die Strömungsmaschine von links angeströmt. An jedem Ort der Rinkanalgrenzen (benetzte Nabe und Gehäuseoberflächen) ist die Einbringung von Fluid mittels eines oder mehrerer geeigneter Injektoren vorteilhaft. In der DE 10 2004 030 597 A1 werden spezielle am Stator ausgeprägte Injektordüsen, insbesondere spezielle nicht-vorstehende Injektordüsen, siehe Fig.2, vorgeschlagen.

Injektordüsen nach dem Stand der Technik, und dazu gehören insbesondere nicht-vorstehende Düsen, ergeben beim Betrieb eine merkliche Störung der herannahenden Strömung und erzeugen bereits bei der Fluidstrahlerzeugung erkennbare Druckverluste. Mit der nach dem Stand der Technik verbundenen üblichen Bauweise treten große parasitäre Leckageströmungen auf, die die Strömung in der Strömungsmaschine ebenfalls nachteilig beeinflussen.

Einen ähnlichen Stand der Technik zeigt die US-PS 5,217,348.

Die DE 10 2004 030597 A1 zeigt eine Strömungsarbeitsmaschine mit Außenrandstrahlerzeugung am Stator, wobei die Schaufelfüße der Statorschaufeln mit jeweils zumindest einer Düse versehen sind, durch welche Fluid hinzugeführt werden kann. Die Düse ist dabei jeweils direkt angrenzend an die Schaufel im Schaufelfuß ausgebildet. Dies bedingt einen nicht unerheblichen Fertigungsaufwand.

Die EP 1 536 147 A2 beschreibt die Fluidzufuhr zur Grenzschichtbeeinflussung, wobei an der Wand des Strömungskanals oder an der Nabe eines Rotors mit einem Vorsprung eine Düse ausgebildet ist, durch welche Fluid zuführbar ist. Diese Ausgestaltungsform erfordert eine spezielle Gestaltung der Gehäusewand oder der Wand der Nabe des Rotors, so dass sich ebenfalls ein erheblicher Fertigungsaufwand ergibt.

Der vorliegenden Erfindung liegt die Aufgabe zugrunde, eine Fluid-Injektordüse der eingangs genannten Art zu schaffen, welche unter Vermeidung der Nachteile des Standes der Technik eine sehr wirkungsvolle Grenzschichtbeeinflussung erreicht.

Erfindungsgemäß wird die Aufgabe durch die Merkmalskombination des Hauptanspruchs gelöst, die Unteransprüche zeigen weitere vorteilhafte Ausgestaltungen der Erfindung.

Im Einzelnen zeigt die Erfindung somit eine Fluid-Injektordüse für den Einsatz in Strömungsmaschinen, wobei der Düsenkanal des Injektors von besonders strömungsgünstiger und störarmer Form ist.

Erfindungsgemäß ist somit für den Einsatz in Strömungsmaschinen eine Fluid-Injektordüse mit besonderer Anordnung geschaffen worden, die eine hochwirksame Randstrahlerzeugung an den begrenzenden Wandungen des Hauptströmungspfades erreicht.

Im Folgenden wird die Erfindung anhand von Ausführungsbeispielen in Verbindung mit den Figuren beschrieben. Dabei zeigt:
- Fig. 1:: eine schematische Darstellung einer Strömungsmaschine, am Beispiel eines Verdichters gemäß dem Stand der Technik,
- Fig. 2:: eine Injektordüse nach dem Stand der Technik,
- Fig. 3a:: Fluid-Injektordüsen in Draufsicht,
- Fig. 3b:: Fluid-Injektordüsen in perspektivi-scher Ansicht,
- Fig. 4:: eine Fluid-Injektordüse im Schnitt Z-Z gemäß Fig. 3a mit Engstelle am Düsenaustritt,
- Fig. 5:: eine Fluid-Injektordüse im Schnitt Z-Z gemäß Fig. 3a mit Engstelle innerhalb des Düsenkanals, und

- Fig. 6:: eine Fluid-Injektordüse im Schnitt Y-Y.

Die Fig. 2 zeigt eine Injektordüse 8 nach dem Stand der Technik. Der obere kleine Teil der Figur zeigt einen Teil der Strömungspfadoberfläche einer Strömungsmaschine. Durch eine als Öffnung erkennbare Injektordüse 8 strömt Fluid auf die Oberfläche aus.

Der Schnitt Z-Z ist vergrößert im unteren Bildteil dargestellt. Er zeigt die Beschaffenheit und Anordnung der Injektordüse 8. Die Injektordüse 8 ist so beschaffen, dass sie an keiner Stelle in den Strömungspfad vorsteht. Dies verursacht deutliche Strömungsfeldstörungen, sobald sie in Betrieb ist und Fluid aus der Injektordüse 8 in den Gaspfad der Strömungsmaschine strömt. Ein dicker Pfeil deutet eine Hauptströmung 9 in der Strömungsmaschine an, die dünnen Pfeile lokale Strömungsabläufe. Auch bedingen die starken Krümmungen der Düsenkonturen eine schlechte Führung des Fluids auf dem Weg in den Strömungpfad der Strömungsmaschine, auch wenn der Engquerschnitt der Injektordüse 8 nahe an ihrem Austritt vorgesehen ist.

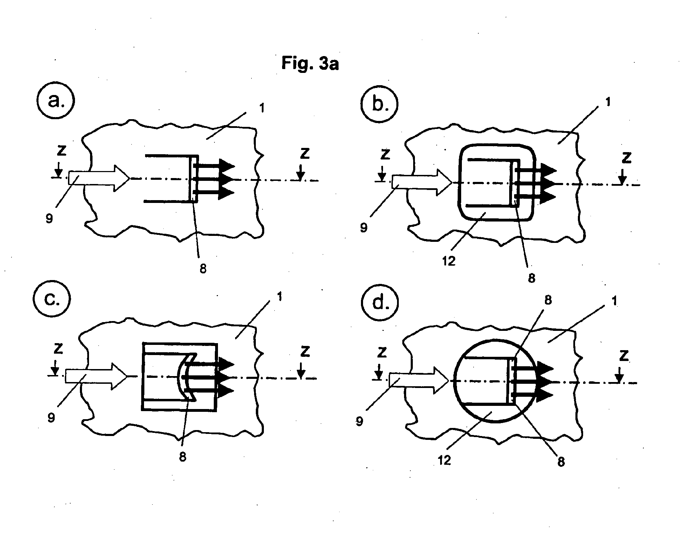

Die Fig. 3a zeigt vier illustrative, nicht beanspruchte Ausführungsbeispiele oder Konfigurationen einer Fluid-Injektordüse 8. Die Teile a, b, c und d der Fig. 2 zeigen einen Teil der Strömungspfadoberfläche einer Strömungsmaschine. Auf einem Teil der Strömungspfadoberfläche ist eine Injektordüse 8 vorgesehen, die sich über die Gesamtheit oder einen Abschnitt des Umfangs des Strömungspfades der Strömungsmaschine erstrecken kann. Ein dicker Pfeil deutet die Hauptströmung 9 in der Strömungsmaschine an, die dünnen Pfeile zeigen das Ausströmen von Fluid aus der Injektordüse 8.

Die Injektordüse 8 ist erfindungsgemäß so ausgebildet, dass sie in den Hauptströmungspfad 9 der Strömungsmaschine vorsteht und auf diese Weise eine günstige Führung des Fluids gestattet, bevor dieses in den Hauptströmungspfad 9 eintritt und so beim Zusammentreffen von Injektorfluid und Hauptströmung 9 geringere Störungen im Strömungsfeld auftreten.

Die erfindungsgemäße Injektordüse 8 ist in einem separaten Bauteil, das in die Hauptströmungspfadwandung eingesetzt wird, vorgesehen.

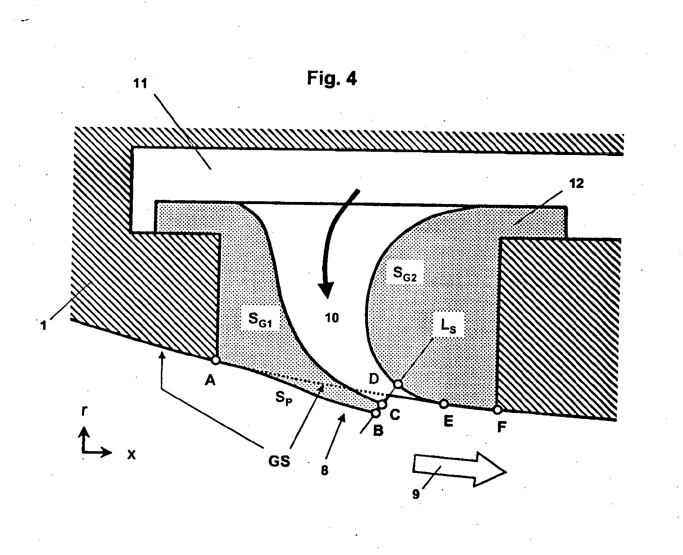

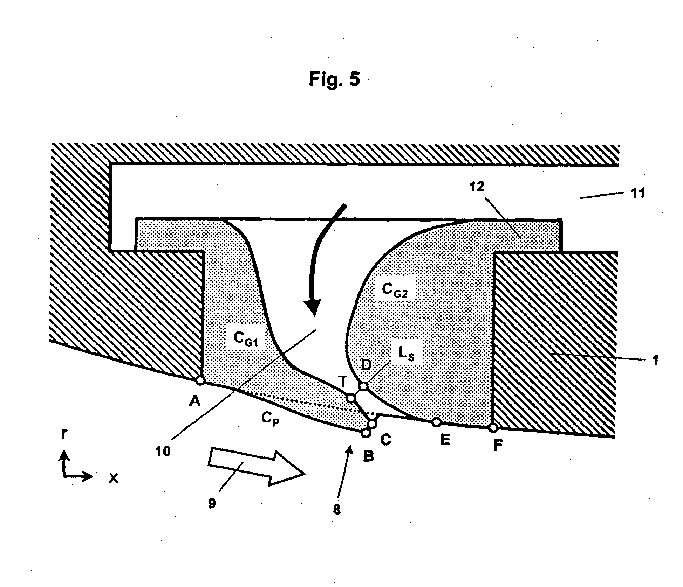

Der Schnitt Z-Z gemäß Fig. 4 und 5 ist vergrößert dargestellt. Wenn die Hauptströmungspfadwandung als ebene Fläche in die Zeichnungsebene abrollt, verläuft der Austrittsschlitz der Injektordüse erfindungsgemäß geradlinig oder auch gekrümmt, ggf. kreisbogenförmig.

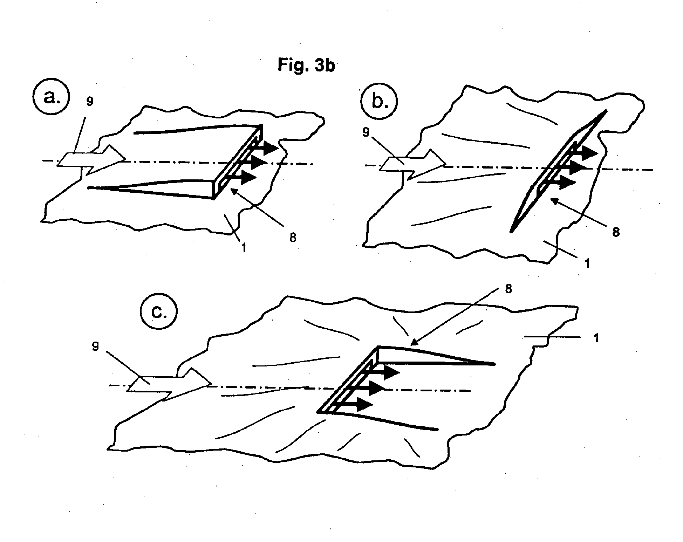

Die Fig. 3b zeigt in den Figurenteilen a.) und b.) in perspektivischer Ansicht zwei nicht beanspruchte Formen der Kontur im Bereich des Düsenaustritts.

Im Figurenteil a.) besitzt die vorstehende Injektordüse 8 zwei etwa mit der Hauptströmungsrichtung orientierte Seitenflanken. Dabei sind stromab der Düsenaustrittsöffnung keine Kanten vorgesehen.

Der Figurenteil b.) zeigt eine Ausführung der Injektordüse 8 mit in Hauptzuströmrichtung glatt auslaufenden Konturen, d.h., ohne in die Hauptströmung gerichtete Kanten. In dieser Ausführung ist eine Absatzfläche lediglich in der Ebene der Düsenaustrittsöffnung vorgesehen.

Der Figurenteil c.) zeigt die erfindungsgemäße Ausführung der Injektordüse 8 mit in allen Richtungen glatt auslaufenden Konturen, d.h., ohne in die Hauptströmung gerichtete Kanten. In dieser Ausführung sind im stromab und seitlich von der Düsenaustrittsöffnung zwei Seitenflanken vorgesehen, die den austretenden Düsenstrahl für eine kurze Strecke führen.

Die Fig. 4 zeigt eine Anordnung der Fluid-Injektordüse im Schnitt Z-Z in der Meridianebene der Strömungsmaschine, aufgespannt durch die Axialkoordinate x und die Radialkoordinate r.

Das Injektorfluid wird seitlich dem Hauptströmungspfad 9 zugeführt, derart, dass ein möglichst tangential an der Hauptströmungswandung entlang gerichteter Strahl entsteht. Die Hauptströmung 9 der Strömungsmaschine ist durch einen großen Pfeil angedeutet. Gegeben ist zunächst die Kontur des Hauptströmungspfades GS, die üblicherweise rotationssymmetrisch zur Achse (Maschinenachse) der Strömungsmaschine ist. Im Bereich, in dem die Injektordüse 8 in den Hauptströmungspfad vorsteht, ist dieser als gepunktete Linie gezeigt.

Der Injektordüse 8 wird Fluid aus einer innerhalb der Wandstruktur vorgesehenen Strömungsversorgungskammer 11 zugeleitet, siehe dünner Pfeil. Die Injektordüse 8 wird von den Konturen SG1 und SG2 begrenzt.

Vorteilhaft ist eine kontinuierlich durch die Injektordüse 8 abnehmende Strömungsquerschnittsfläche, sowie eine rund und kantenfreie Form des Eintritts des Düsenkanals 10. Es existieren stromauf und stromab der Injektordüse 8 zwei Grenzpunkte A und F, die insbesondere dann von Bedeutung sind, wenn die Injektordüse 8 gemäß der Erfindung nicht direkt in der Hauptströmungspfadwandung, sondern wie in der Darstellung der Fig. 4 in einem separaten Bauteil (Injektordüsenkörper 12) vorgesehen ist.

An diesen Punkten A und F grenzen die von der Hauptströmung benetzten Oberflächen des Injektorelements und der Hauptströmungspfadwandung aneinander. Dabei ist zwischen einem weiteren Punkt E (Düsenübergangspunkt) und dem Punkt F die Kontur des Injektors deckungsgleich mit der Kontur der Hauptströmungspfadwandung an anderen Umfangspositionen.

Der in Strömungsrichtung letzte Punkt der Düsenkontur SG1 ist der Düsenendpunkt C. Errichtet man eine Senkrechte LS auf der gegenüber liegenden Düsenkontur SG2 und lässt diese durch den Düsenendpunkt C gehen, so ergibt sich der auf SG2 befindliche Fußpunkt D. Der Düsenendpunkt C und der Fußpunkt D definieren den Austrittsquerschnitt der Injektordüse 8. Erfindungsgemäß liegt der Düsenendpunkt C im Bereich der Hauptströmung, d.h., an einem über die Hauptströmungspfadkontur GS hinausstehenden Teil des Injektors.

Die erfindungsgemäße Injektordüse 8 steht besonders weit vor, wenn der Fußpunkt D die Position des Übergangspunktes E einnimmt. Der Injektordüse 8 in einem separaten Bauteil vorgesehen ist und ein Grenzpunkt F existiert, kann der Übergangspunkt E mit dem Grenzpunkt F zusammenfallen.

Erfindungsgemäß besonders günstig ist es, wenn der Abstand zwischen den Punkten E und F das mindestens Dreifache der Höhe des Düsenendquerschnitts, nämlich des Abstandes zwischen den Punkten C und D beträgt.

Zudem ist es erfindungsgemäß besonders günstig, am Übergangspunkt E keinen Konturknick, sondern einen tangentialen Übergang zwischen der Injektorkontur SG2 und der Hauptströmungspfadkontur GS vorzusehen.

Zudem ist es erfindungsgemäß besonders günstig, am Grenzpunkt A keinen Konturknick sondern einen tangentialen Übergang zwischen der Injektoraussenkontur SP und der Hauptströmungspfadkontur GS vorzusehen.

Ferner ist es erfindungsgemäß besonders günstig, am Grenzpunkt F keinen Konturknick sondern einen tangentialen Übergang zwischen der Injektoraußenkontur (Teil von SG2) und der Hauptströmungspfadkontur GS vorzusehen.

Weiterhin ist es erfindungsgemäß besonders günstig, am Düseneckpunkt B, der im Fall einer ebenfalls erfindungsgemäßen spitzen Kante mit dem Düsenendpunkt C zusammenfällt, eine Konturneigung vorzusehen, die im Wesentlichem mit der Neigung der Hauptströmungspfadkontur GS an benachbarter Position übereinstimmt.

Die Fig. 5 zeigt in ganz ähnlicher Weise wie Fig. 4 eine Anordnung der Fluid-Injektordüse im Schnitt Z-Z.

Das Injektorfluid wird seitlich dem Hauptströmungspfad zu geführt, derart, dass ein möglichst tangential an der Hauptströmungswandung entlang gerichteter Strahl entsteht. Der Injektordüse 8 wird Fluid aus einer innerhalb der Wandstruktur vorgesehenen Strömungsversorgungskammer SC zugeleitet, siehe dünner Pfeil. Die Injektordüse 8 wird von den Konturen SG1 und SG2 begrenzt, wobei es wie in diesem Beispiel dargestellt, vorteilhaft sein kann, die engste Stelle der Injektordüse 8 nicht am Endquerschnitt, sondern an einer Position im Innern der Injektordüse 8 vorzusehen, wenn die Strömungsgeschwindigkeiten in der Injektordüse 8 hoch sind. In diesem Fall ergeben sich mit einer auf der Düsenkontur CG2 errichteten Senkrechten LS die Punkte T und D, die den engsten Querschnitt markieren.

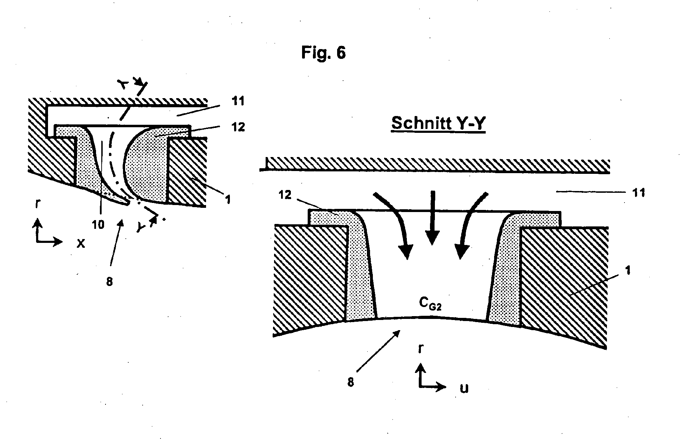

Die Fig. 6 zeigt eine Anordnung der Fluid-Injektordüse 8 in einem gekrümmten Schnitt Y-Y durch die Injektordüse 8. Auch in diesem Schnitt ist es besonders vorteilhaft, durch die Injektordüse 8 eine abnehmende Weite des Düsenkanals sowie eine runde und kantenfreie Form des Eintritts des Düsenkanals vorzusehen.

Es erweist sich als besonders vorteilhaft:
- wenn der Strömungskanal der Fluid-Injektordüse mit mindestens einer innerhalb der den Hauptströmungspfad bildenden Bauteilen vorgesehenen Fluidversorgungskammer verbunden ist, dass die Fluid-Injektordüse einen im Wesentlichen tangential entlang der Hauptströmungspfadwandung gerichteten Strahl erzeugt, und dass ein Teil des Düsenaustrittsquerschnitts der Fluid-Injektordüse in wenigstens einem betrachteten Schnitt durch die Düse über die Kontur der begrenzenden Hauptströmungspfadwandung in den Hauptströmungspfad vorsteht, wobei die Düse folgende Merkmale besitzt:
   a.) einen stromauf gelegenen Grenzpunkt A
   b.) einen stromab gelegenen Grenzpunkt F
   c.) einen Düseneckpunkt B und einen Düsenendpunkt C, von denen mindestens einer eine über die Kontur der Hauptströmungspfadwandung hinausstehende Portion der Injektordüse markiert
   d.) einen Düsenübergangspunkt E
   e.) einen Düsenendpunkt C und ein Fusspunkt D, die den Düsenaustrittsquerschnitt markieren
   f.) eine an der Düsenöffnung am Düsenendpunkt C endende Düsenkontur SG1
   g.) eine am Düsenübergangspunkt E in die Kontur des Hauptströmungspfades übergehende Düsenkontur SG2
   h.) eine mindestens teilweise in den Hauptströmungspfad vorstehende und von der Hauptströmung benetzte Injektoraussenkontur SP,
- wenn mindestens eine Fluid-Injektordüse an einem Teil des Umfangs der Strömungsmaschine vorgesehen ist,
- wenn mindestens eine Fluid-Injektordüse mindestens teilweise im beschaufelten Bereich zwischen einer Schaufelvorderkantenebene und einer Schaufelhinterkantenebene beziehungsweise mindestens teilweise innerhalb mindestens einer Schaufelpassage vorgesehen ist,
- wenn mindestens eine Fluid-Injektordüse mindestens teilweise im unbeschaufelten Bereich, das heisst stromauf einer Schaufelvorderkantenebene beziehungsweise stromab einer Schaufelhinterkantenebene, vorgesehen ist,
- wenn die Austrittsöffnung mindestens einer Injektordüse in einer Perspektive senkrecht zur Hauptströmungspfadwandung entlang einer geraden Linie ausgebildet ist,
- wenn die Austrittsöffnung mindestens einer Injektordüse in einer Perspektive senkrecht zur Hauptströmungspfadwandung entlang einer gekrümmten gegebenenfalls auch keisbogenförmigen Linie ausgebildet ist,
- wenn die Strömungsquerschnittsfläche mindestens einer Fluid-Injektordüse in Durchströmungsrichtung kontinuierlich abnimmt,
- wenn der engste Querschnitt mindestens einer Injektordüse an einer Position im Innern der Injektordüse vorgesehen ist, derart, dass die Düse stromauf des Düsenaustrittsquerschnitts einen zunächst konvergenten und dann divergenten Querschnittsverlauf besitzt,
- wenn die benetzte Kontur am Übergang zwischen mindestens einer Fluidversorgungskammer und mindestens einer Fluidinjektordüse in mindestens einer Schnittebene durch die Fluid-Injektordüse rund und knickfrei ausgestaltet ist,
- wenn an mindestens einer Fluid-Injektordüse der Abstand zwischen den Punkten E und F das mindestens Dreifache der Höhe des Düsenendquerschnitts, nämlich des Abstandes zwischen den Punkten C und D beträgt,
- wenn an mindestens einer Fluid-Injektordüse am Übergangspunkt E ein knickfreier tangentenstetiger Übergang zwischen der Injektordüsenkontur SG2 und der Hauptströmungspfadkontur GS vorgesehen ist,
- wenn an mindestens einer Fluid-Injektordüse an mindestens einem der Grenzpunkte A und F ein knickfreier tangentenstetiger Konturübergang vorgesehen ist,
- wenn an mindestens einer Fluid-Injektordüse am Düseneckpunkt B eine Konturneigung vorgesehen ist, die im Wesentlichem mit der Neigung an einer - senkrecht zur Hauptströmungsrichtung betrachtet - benachbarten Position der Hauptströmungspfadkontur GS übereinstimmt,
- wenn die Düsenaustrittskante mindestens einer Fluid-Injektordüse gänzlich spitz ausgeführt ist und somit der Düsenendpunkt C und der Düseneckpunkt B zusammenfallen,
- wenn bei räumlicher Betrachtung der Übergänge zwischen vorstehender Düsenaustrittsöffnung und der Hauptströmungspfadwandung die Kontur stromauf um die Düsenaustrittsöffnung kantenfrei verrundet gestaltet ist,
- wenn bei räumlich Betrachtung der Übergänge zwischen vorstehender Düsenaustrittsöffnung und der Hauptströmungspfadwandung die Kontur um die Düsenaustrittsöffnung kantenfrei verrundet gestaltet ist.

### Bezugszeichenliste

- 1: Gehäuse
- 2: Ringkanal
- 3: Rotortrommel (Nabe)
- 4: Maschinenachse
- 5: Vorleitrad
- 6: Rotor/Rotorschaufel
- 7: Stator/Statorschaufel
- 8: Injektordüse
- 9: Hauptströmung/Hauptströmungspfad
- 10: Injektordüsen-Krümmungskanal
- 11: Fluidversorgungskanal
- 12: Injektordüsenkörper

## Patentansprüche

1. Strömungsarbeitsmaschine mit einem zwischen einem Gehäuse (1) und einer um eine Maschinenachse (4) drehbaren Rotortrommel (3) gebildeten Ringkanal (2), in welchem jeweils zumindest eine Reihe von Rotorschaufeln (6) angeordnet sind, wobei der Ringkanal (2) einen Hauptströmungspfad bildet und wobei zumindest eine Fluid-Injektordüse (8) im Bereich einer Wandung des Gehäuses (1) und/oder der Rotortrommel (3) angeordnet ist, wobei zumindest ein Teil der Injektordüse (8) in den Hauptströmungspfad (9) ragt und zur Erzeugung eines tangential zur Wandung des Hauptströmungspfads gerichteten Strahls ausgebildet ist, **dadurch gekennzeichnet, dass** zumindest eine Injektordüse (8) in einem separaten Düsenkörper (12) ausgebildet ist, welcher in einer Wandung eines Hauptströmungspfades (9) angeordnet ist und dass zur Führung des austretenden Düsenstrahls stromab und seitlich von der Düsenaustrittsöffnung zwei Seitenflanken ausgebildet sind.

2. Strömungsarbeitsmaschine nach Anspruch 1, **dadurch gekennzeichnet, dass** zumindest eine Injektordüse (8) an einem Teil des Umfangs des Ringkanals (2) angeordnet ist.

3. Strömungsarbeitsmaschine nach einem der Ansprüche 1 oder 2, **dadurch gekennzeichnet, dass** zumindest eine Injektordüse (8) mindestens teilweise in einem beschaufelten Bereich zwischen einer Schaufelvorderkantenebene und einer Schaufelhinterkantenebene angeordnet ist.

4. Strömungsarbeitsmaschine nach einem der Ansprüche 1 bis 3, **dadurch gekennzeichnet, dass** zumindest eine Injektordüse (8) mindestens teilweise innerhalb mindestens einer Schaufelpassage angeordnet ist.

5. Strömungsarbeitsmaschine nach einem der Ansprüche 1 bis 4, **dadurch gekennzeichnet, dass** zumindest eine Injektordüse (8) mindestens teilweise im unbeschaufelten Bereich stromauf einer Schaufelvorderkantenebene oder stromab einer Schaufelhinterkantenebene in dem Ringkanal (2) angeordnet ist.

6. Strömungsarbeitsmaschine nach einem der Ansprüche 1 bis 5, **dadurch gekennzeichnet, dass** die Injektordüse (8) mit einer Fluidversorgungskammer (11) verbunden ist.

7. Strömungsarbeitsmaschine nach einem der Ansprüche 1 bis 6, **dadurch gekennzeichnet, dass** die Austrittsöffnung zumindest einer Injektordüse (8) in einer Ansicht senkrecht zur Hauptströmung (9) längs einer geraden Linie ausgebildet ist.

8. Strömungsarbeitsmaschine nach einem der Ansprüche 1 bis 6, **dadurch gekennzeichnet, dass** die Austrittsöffnung zumindest einer Injektordüse (8) in einer Ansicht senkrecht zur Hauptströmung (9) längs einer gekrümmten oder bogenförmigen Linie ausgebildet ist.

## Claims

1. Fluid flow machine with an annulus duct (2) formed between a casing (1) and a rotor drum (3), which is rotatable about a machine axis (4), with at least one row of rotor blades (6) being respectively arranged in the annulus duct (2), with the latter forming a main flow path and with at least one fluid injector nozzle (8) being arranged in the area of a wall of the casing (1) and/ or of the rotor drum (3), with at least a part of the injector nozzle (8) protruding into the main flow path (9) and being provided for the generation of a jet which is tangentially directed to the wall of the main flow path, **characterized in that** at least one injector nozzle (8) is provided in a separate nozzle body (12), which is arranged in a wall of a main flow path (9), and that two side flanks are provided downstream and laterally of the nozzle exit opening for guiding the exiting jet stream.

2. Fluid flow machine in accordance with Claim 1, **characterized in that** at least one injector nozzle (8) is arranged on a part of the circumference of the annulus duct (2).

3. Fluid flow machine in accordance with one of the Claims 1 or 2, **characterized in that** at least one injector nozzle (8) is arranged at least partly in a bladed area between a blade leading-edge plane and a blade trailing-edge plane.

4. Fluid flow machine in accordance with one of the Claims 1 to 3, **characterized in that** at least one injector nozzle (8) is arranged at least partly within at least one blade passage.

5. Fluid flow machine in accordance with one of the Claims 1 to 4, **characterized in that** at least one injector nozzle (8) is arranged at least partly in the unbladed area upstream of a blade leading-edge plane or downstream of a blade trailing-edge plane in the annulus duct (2).

6. Fluid flow machine in accordance with one of the Claims 1 to 5, **characterized in that** the injector nozzle (8) is connected to a fluid supply chamber (11).

7. Fluid flow machine in accordance with one of the Claims 1 to 6, **characterized in that** the exit opening of at least one injector nozzle (8) is provided in a view perpendicular to the main flow (9) along a straight line.

8. Fluid flow machine in accordance with one of the Claims 1 to 6, **characterized in that** the exit opening of at least one injector nozzle (8) is provided in a view perpendicular to the main flow (9) along a curved or arched line.

## Revendications

1. Machine à écoulement avec un canal annulaire (2) formé entre un carter (1) et un tambour de rotor (3) tournant autour d'un axe de machine (4), canal dans lequel sont respectivement disposées au moins une rangée d'aubes de rotor (6), sachant que le canal annulaire (2) forme une voie d'écoulement principale et qu'au moins une buse d'injection de fluide (8) est placée dans la zone d'une paroi du carter (1) et/ ou du tambour de rotor (3), qu'au moins une partie de la buse d'injection (8) saille dans la voie d'écoulement principale (9) et est conçue pour générer un jet orienté tangentiellement à la paroi de la voie d'écoulement principale, **caractérisée en ce qu'**au moins une buse d'injection (8) est formée dans un corps de buse distinct (12) qui est placé dans une paroi d'une voie d'écoulement principale (9), et que deux flancs latéraux sont formés pour guider le jet émergent en aval et latéralement par rapport à l'orifice de sortie de la buse.

2. Machine à écoulement selon la revendication n° 1, **caractérisée en ce qu'**au moins une buse d'injection (8) est disposée sur une partie de la circonférence du canal annulaire (2).

3. Machine à écoulement selon une des revendications n° 1 ou n° 2, **caractérisée en ce qu'**au moins une buse d'injection (8) est disposée au moins partiellement dans une zone aubagée entre un plan du bord d'attaque d'aube et un plan du bord de fuite d'aube.

4. Machine à écoulement selon une des revendications n° 1 à n° 3, **caractérisée en ce qu'**au moins une buse d'injection (8) est disposée au moins partiellement dans au moins un passage d'aube.

5. Machine à écoulement selon une des revendications n° 1 à n° 4, **caractérisée en ce qu'**au moins une buse d'injection (8) est disposée au moins partiellement dans la zone non-aubagée en amont d'un plan du bord d'attaque d'aube ou en aval d'un plan du bord de fuite d'aube dans le canal annulaire (2).

6. Machine à écoulement selon une des revendications n° 1 à n° 5, **caractérisée en ce que** la buse d'injection (8) est reliée à une chambre d'alimentation en fluide (11).

7. Machine à écoulement selon une des revendications n° 1 à n° 6, **caractérisée en ce que** dans une vue perpendiculaire à l'écoulement principal (9), l'orifice de sortie d'au moins une buse d'injection (8) est formé le long d'une ligne droite.

8. Machine à écoulement selon une des revendications n° 1 à n° 6, **caractérisée en ce que** dans une vue perpendiculaire à l'écoulement principal (9), l'orifice de sortie d'au moins une buse d'injection (8) est formé le long d'une ligne courbe ou arquée.
